# EUROPÄISCHE PATENTANMELDUNG

(11) **EP 3 518 165 A1**
(43) Veröffentlichungstag der Anmeldung: **31.07.2019**
(21) Anmeldenummer: 18153210.2
(22) Anmeldetag: 24.01.2018
(51) Int. Cl.: G06Q 20/12

(54) **VERFAHREN ZUR ANONYMEN ERFASSUNG DER INANSPRUCHNAHME EINER GEBÜHRENPFLICHTIGEN LEISTUNG DURCH EINEN TEILNEHMER**

(71) Anmelder: Siemens Mobility AG, 8304 Wallisellen (CH)
(72) Erfinder: KNAUS LANDOLT, Sandro, 8304 Wallisellen (CH)
(74) Vertreter: Maier, Daniel Oliver

(57) **Zusammenfassung**

Erfindungsgemäss ist ein Verfahren zur Erfassung der Inanspruchnahme einer gebührenpflichtigen Leistung durch einen Teilnehmer, deren Umfang durch einen Bezug einer Dienstleistung, wie z.B. Beförderung, Zuschaustellung von Objekten, kulturelle Darbietung usw., bestimmt wird, vorgesehen, welches die folgenden Verfahrensschritte umfasst:
a) Registrieren des Teilnehmers am Leistungsort anhand eines den Teilnehmers individualisierenden Transponders, wie z.B. E-Ticket-Karte, Smart Phone mit entsprechender App und dergleichen;
b) Aussenden von Zählimpulsen am Leistungsort, wobei die Zählimpulse für die in Anspruch genommene Menge der Dienstleistung repräsentativ sind;
c) Empfangen und Zählen der Zählimpulse auf dem Transponder und/oder mit dem Empfang des oder der Zählimpulse entsprechendes Inkrementieren eines mit dem Transponder assoziierbaren Speichers für die Zählimpulse; und
d1) periodisches Auslesen eines den Transponder individualisierenden Datensatzes und des mit dem Transponder assoziierbaren Speichers für die Zählimpulse; oder
d2) entsprechend der empfangenen Zählimpulse Verringern eines Prepaid-Guthabens, das mit dem Transponder assoziiert ist.

Auf diese Weise ist es möglich, die Menge oder den Umfang der durch den Teilnehmer in Anspruch genommenen Dienstleistung datenschutztechnisch unbeanstandbar zu erfassen und später an den Teilnehmer bzw. dessen Rechnungsempfänger, z.B. der Arbeitgeber des Teilnehmers oder dergleichen, zu verrechnen.

## Beschreibung

Die vorliegende Erfindung bezieht sich auf ein Verfahren zur Erfassung der Inanspruchnahme einer gebührenpflichtigen Leistung durch einen Teilnehmer.

Bei der Erfassung von gebührenpflichtigen Leistungen geht es in der Regel um die Erfassung von Transportleistungen im öffentlichen Nahverkehr oder in Freizeiteinrichtungen, wie z.B. Skigebiete, Fun-Parks. Gebührenpflichtige Leistungen können aber auch der Besuch von Kunstausstellungen, der Aufenthalt auf einem Event-Gelände oder einer Bibliothek oder einem Messe-Gelände oder ähnlichem sein.

Zunehmend versuchen die Betreiber dieser Einrichtungem im Wege von e-ticketing-Anwendungen den Komfort für den Teilnehmer zu erhöhen und selbst einerseits Kosten für die Verrechnung der in Anspruch genommenen Leistungen zu reduzieren und andererseits Informationen über die Belegung ihrer Anlagen/Fahrzeuge zur Verbesserung der logistischen Prozesse in ihren eigenen Betriebsabläufen gewinnen zu können.

Zur Bereitstellung von E-Ticketing-Anwendungen sind zahlreiche Lösungen bekannt und im Einsatz. Grundsätzlich wird bei diesen Anwendungen zwischen Be-In-Be-Out-Systemen (BIBO) und Check-In-Check-Out-Systemen (CICO) unterschieden. Während der Benutzer bei BIBO-Systemen automatisch in einem Verkehrsmittel durch das Vorhandensein eines elektronischen Transponders erfasst wird, ist bei CICO-Systemen die Mitwirkung des Benutzers erforderlich. Im öffentlichen Nahverkehr muss der Benutzer beispielsweise seinen Ein- und Aussteigeort und -zeitpunkt durch eine aktive Betätigung beispielsweise einer Applikation auf einem Smart Phone oder durch die Identifikation einer Chipkarte an einem Zugangs- und Ausgangsgate festlegen. Im ersten Fall setzt dies voraus, dass das Smart Phone über eine hinreichende Ladungsreserve verfügt, damit der Benutzer seinen besonders für die Festlegung des Fahrpreises relevanten Ausstieg aus dem Verkehrsmittel quittieren kann. Im zweiten Fall setzt dies voraus, dass der Benutzer die Chipkarte mitführt um sie an dem Zugangs- und dem Ausgangsgate erfassen zu können. Beide vorgenannten Voraussetzungen können aber nicht gegeben sein, weil das Smart Phone des Benutzers einen zu geringen Ladungszustand aufweist oder er die Chipkarte vergessen hat. In beiden Fällen existiert heute in der Regel noch als Rückfallebene das Papierticket, das an einem Automaten gelöst werden kann.

Als weiterer Aspekt in dem Themenkreis des E-Ticketings spielt auch der Datenschutz eine nicht zu unterschätzende Rolle und wird daher in der Öffentlichkeit sehr kontrovers diskutiert. Die heutigen oben beschriebenen Ansätze von E-Ticketing mit BiBo and CICO haben beiden datenschutztechnisch den Nachteil, dass der Abfahrts- und der Ankunftsort zwingend datentechnisch erfasst werden müssen, um dem Fahrgast später eine Rechnung erstellen zu können. Um beispielsweise auch noch tageszeitabhängige Tarifmodelle zur Anwendung bringen zu können, muss der Fahrgast weiter in Kauf nehmen, dass zusätzlich auch seine Abfahrts- und Ankunftszeit datentechnisch erfasst werden. Damit können genaue Bewegungsprofile des Fahrgastes erstellt werden, die neben der genauen Kenntnis, wann er von A nach B gefahren ist, unter anderem auch für vom Fahrgast nicht unbedingt gewollte Zusatzdienste vom Bahnunternehmen an Drittfirmen zur weiteren Kommerzialisierung verkauft werden. Aus diesen Gründen kann es flächendeckenden Einführung derartiger E-Ticketing-Systeme zu datenschutzmotivierten Einsprachen kommen, welche unter Umständen die Einführung solcher Systeme verzögern bzw. ganz stoppen können.

Der vorliegenden Erfindung liegt daher die Aufgabe zugrunde, ein Verfahren zur Erfassung der Inanspruchnahme einer gebührenpflichtigen Leistung durch einen Teilnehmer anzugeben, das die Datenschutzinteressen des Teilnehmers besser schützt und trotzdem eine vom Benutzungsumfang abhängigen Verrechnung der gebührenpflichtigen Leistung ermöglicht.

Diese Aufgabe wird erfindungsgemäss durch Verfahren zur Erfassung der Inanspruchnahme einer gebührenpflichtigen Leistung durch einen Teilnehmer, deren Umfang durch einen Bezug einer Dienstleistung, wie z.B. Beförderung, Zuschaustellung von Objekten, kulturelle Darbietung usw., bestimmt wird, gelöst, welches die folgenden Verfahrensschritte umfasst:
a) Registrieren des Teilnehmers am Leistungsort anhand eines den Teilnehmers individualisierenden Transponders, wie z.B. E-Ticket-Karte, Smart Phone mit entsprechender App und dergleichen;
b) Aussenden von Zählimpulsen am Leistungsort, wobei die Zählimpulse für die in Anspruch genommene Menge der Dienstleistung repräsentativ sind;
c) Empfangen und Zählen der Zählimpulse auf dem Transponder und/oder mit dem Empfang des oder der Zählimpulse entsprechendes Inkrementieren eines mit dem Transponder assoziierbaren Speichers für die Zählimpulse; und
d1) periodisches Auslesen eines den Transponder individualisierenden Datensatzes und des mit dem Transponder assoziierbaren Speichers für die Zählimpulse; oder
d2) entsprechend der empfangenen Zählimpulse Verringern eines Prepaid-Guthabens, das mit dem Transponder assoziiert ist.

Auf diese Weise ist es möglich, die Menge oder den Umfang der durch den Teilnehmer in Anspruch genommenen Dienstleistung datenschutztechnisch unbeanstandbar zu erfassen und später an den Teilnehmer bzw. dessen Rechnungsempfänger, z.B. der Arbeitgeber des Teilnehmers oder dergleichen, zu verrechnen. Da die Zählimpulse beispielsweise eine Anzahl von zurückgelegten Kilometern und/oder eine Anzahl von Aufenthaltungsminuten repräsentierten, ist es nicht erforderlich den Abfahrts- und den Ankunftsort und/oder den Eintritts- und Austrittsort sowie ggfs. die dazu gehörenden Zeitpunkte zu erfassen. Eine Erstellung des Bewegungsprofils wird daher weitestgehend verunmöglicht und kann sich daher nur darauf beschränken, dass der Erbringer der Dienstleistung nur Kenntnis davon hat, wieviele Kilometer der Teilnehmer in einem Abrechnungszeitraum, wie z.B. ein Monat oder eine Woche, zurückgelegt hat und/oder oder wieviele Minuten/Stunden/Tage der Teilnehmer die Dienstleistung in Anspruch genommen hat.

In einer zweckmässigen Ausgestaltung der vorliegenden Erfindung kann der Leistungsort ein Fahrzeug des öffentlichen Verkehrs und/oder eines privaten Beförderungsunternehmens, wie z.B. ein Bergbahnbetreiber, ein Privatbuslinienbetreiber, oder ein Museum, ein Theater, eine Konzerthalle, ein Freizeitpark, ein Erlebnisbad, eine Bibliothek, ein Tierpark und dergleichen sein. Überall dort, wo der Umfang der in Anspruch genommenen Dienstleistung durch die Erfassung der zurückgelegten Distanz und/oder der Anwesenheitsdauer festgestellt werden kann, kann daher der Leistungsort beweglicher Natur (Fahrzeug) und/oder räumlich unbeweglicher Natur (Gebäude, Areal) sein.

Ebenfalls in zweckmässiger Ausgestaltung der vorliegenden Erfindung kann der Zählimpuls repräsentiv für eine Beförderungsdistanz und/oder für eine Aufenthaltsdauer sein. Ein Zählimpuls kann so eine beliebige Distanz und/oder Aufenthaltsdauer darstellen und beispielhaft die zurückgelegte Distanz von einem Kilomer und/oder die Anwesenheitsdauer von einer halben Stunden repräsentieren.

Bei der Realisierung von E-Ticketing-Systemen ist es stets wünschenswert auf möglichst viele der bereits vorhandenen Ressourcen zurückgreifen zu können. Beispielhaft kann hierfür der heutzutage auf jedem Fahrzeug des öffentlichen Nahverkehrs befindliche Bordcomputer oder bei Zügen die sogenannten OBU (On-board unit) genannt werden. Da das erfindungsgemässe Verfahren nicht den Abfahrts- und Ankunftsort erfasst, ist es besonders zweckmässig, wenn der Zählimpuls anhand von mindestens einer Wegmarke von einer Onboard-Unit eines Beförderungsmittels abgeleitet wird, wobei die Wegmarke beim Passieren von dem Beförderungsmittel erfasst wird. Typische Wegmarken im Zugverkehr sind beispielsweise sogenannten Balisen (nach dem Standart ETCS arbeitend auch Euro-Balise genannt) oder Loop-Kabel (analog Euroloop), die dem Zug seine genaue Position mitteilen. Entsprechend kann in der Engineering-Phase des E-ticketing-Systems dieser Wegmarke eine Anzahl Entfernungkilometer zugeordnet werden, vorzugsweise wenn eindeutig ist, dass der Zug bei der Überfahrt dieser Wegmarke eine genau definierte Strecke zwischen zwei Stationen zurücklegt.

Einerseits ist es mit der Erfindung möglich, einen auf dem Transponder befindlichen Speicher mit dem Empfang des Zählimpulses zu inkrementieren und entsprechend einen Betrag eines auf dem Transponder verwalteten Prepaid-Guthabens abzubuchen. Andererseits kann es aber in einer vorteilhaften Ausgestaltung der Erfindung auch vorgesehen sein, dass sich der mit dem Transponder assoziierbare Speicher für die Zählimpulse am Leistungsort, z.B. in einem Fahrzeugrechner, befindet und dort nach der Erfassung des Transponders temporär mit dem Transponder logisch verlinkt wird.

Nach einem periodischen transponder-bezogenen Auslesen des Standes der Zählimpulse kann es vorgesehen sein, dass ein den ausgelesenen Zählimpulsen entsprechender Betrag an den Teilnehmer oder dessen Rechnungsempfänger verrechnet wird.

Weitere vorteilhafte Ausgestaltungen der vorliegenden Erfindung sind den übrigen Unteransprüchen zu entnehmen.

Vorteilhafte Ausführungsbeispiele der vorliegenden Erfindung werden nachfolgend mit Bezug auf die anhängende Zeichnung näher erläutert. Dabei zeigen:
- Figur 1: schematisch ein Schienenfahrzeug bei Überfahrt einer ersten Balise; und
- Figur 2: schematisch ein Schienenfahrzeug nach der Überfahrt einer zweiten Balise.

Das erfindungsgemässe Verfahren zur Erfassung der Inanspruchnahme einer gebührenpflichtigen Dienstleistung durch einen Teilnehmer, deren Umfang durch einen Bezug einer Dienstleistung, wie z.B. Beförderung, Zuschaustellung von Objekten, kulturelle Darbietung usw., bestimmt wird, wird hier anhand des Bespiels des öffentlichen Nahverkehrs erläutert, welches die folgenden Verfahrensschritte umfasst:
Zunächst wird der Teilnehmer mittels eine CICO oder BIBO-Systems an dem Leistungsort, hier im Innern eines S-Bahn-Waggons, erfasst. Dabei wird nicht der Teilnehmer persönlich erfasst, sondern ein den Teilnehmer individualisierender Transponder, wie z.B. E-Ticket-Karte, Smart Phone mit entsprechender App und dergleichen, den der Teilnehmer mit sich trägt. Durch eine bidirektionale Kommunikation zwischen dem Transponder und dem Bordrechner des S-Bahn-Waggons wird somit die Anwesenheit des Transponders erfasst (hier das Beispiel BIBO-System). Hierzu kann das BIBO-System beispielsweise nach Abfahrt an einer Haltestelle eine Abfrage aussenden, dass alle sich in Reichweite des entsprechenden Abfragesignals befindlichen Transponder ihre ID an den Bordrechner bekanntmachen.

Kurz vor dem Erreichen der nächsten Haltestelle wird ein die zwischen den beiden Haltestellen zurückgelegte Strecke repräsentierender Zahlimpuls vom Bordrechner ausgesendet. Dieser Zählimpulse wird auf dem Transponder empfangen und entsprechend gespeichert. Mit dem Empfang des oder der Zählimpulse wird ein entsprechender Speicher für die Zählimpulse inkrementiert. Dieser Speicher kann entweder direkt auf dem Transponder angeordnet sein oder aber auch temporär im Bordrechner des S-Bahn-Waggons mit dem Transponder angelegt werden. Verlässt der Fahrgast den S-Bahn-Waggon, meldet sich der Transponder nicht mehr auf die betreffende Abfrage und kann daher als nicht mehr im Zug anwesend angesehen werden.

Folglich kann durch periodisches Auslesen des den Transponder individualisierenden Datensatzes und des mit dem Transponder assoziierbaren Speichers für die Zählimpulse zumindest auf den Transponder bezogen ausgewertet werden, wieviele Kilometer der Fahrgast innerhalb des Auslesezeitraum zurückgelegt hat und dies entsprechend in einem Nachbearbeitungsvorgang zu verrechnen. Alternativ ist aber auch möglich, mit dem Empfang der Zählimpulse auf dem Transponder ein dem Fahrpreis entsprechende Prepaid-Guthaben zu verringern, das mit dem Transponder verwaltet wird.

Auf diese Weise ist es möglich, die Menge oder den Umfang der durch den Teilnehmer in Anspruch genommenen Fahrkilometer datenschutztechnisch unbeanstandbar zu erfassen und später an den Teilnehmer bzw. dessen Rechnungsempfänger, z.B. der Arbeitgeber des Teilnehmers oder dergleichen, zu verrechnen. Da die Zählimpulse beispielsweise hier eine Anzahl von zurückgelegten Kilometern und/oder auch eine Anzahl von Aufenthaltungsminuten repräsentieren können, ist es nicht erforderlich den Abfahrts- und den Ankunftsort und/oder den Eintritts- und Austrittsort sowie ggfs. die dazu gehörenden Zeitpunkte zu erfassen. Eine Erstellung des Bewegungsprofils wird daher weitestgehend verunmöglicht und kann sich daher nur darauf beschränken, dass der Erbringer der Dienstleistung nur Kenntnis davon hat, wieviele Kilometer der Teilnehmer in einem Abrechnungszeitraum, wie z.B. ein Monat oder eine Woche, zurückgelegt hat und/oder oder wieviele Minuten/Stunden/Tage der Teilnehmer die Dienstleistung in Anspruch genommen hat.

Grundsätzlich kann der Leistungsort neben dem vorstehend erläuterten Fahrzeug des öffentlichen Verkehrs auch ein Fahrzeug eines privaten Beförderungsunternehmens, wie z.B. ein Bergbahnbetreiber, ein Privatbuslinienbetreiber, oder aber ein fester Ort, wie ein Museum, ein Theater, eine Konzerthalle, ein Freizeitpark, ein Erlebnisbad, eine Bibliothek, ein Tierpark und dergleichen, sein. Ebenso ist der Zählimpuls hier immer repräsentiv für eine Beförderungsstrecke und/oder für eine Aufenthaltsdauer.

Der Zählimpuls wird vorliegend anhand von mindestens einer Balise von einer Onboard-Unit der S-Bahn-Lokomotive oder des S-Bahn-Steuerwagens abgeleitet, wobei die Balise beim Passieren von der Onboard-Unit bzw. einer mit ihr assoziierten Antenne durch das von ihr ausgesendete Balisen-Telegramm (Tele-Powering) erfasst wird.

Dieser Vorgang wird schematisch durch die beiden Figuren dargestellt. Damit das erfassungsmässig anonyme Fahren, möglich ist, wird die vorhandene Infrastruktur des Zuges (Fahrzeugrechner, Onboard-Unit) und/oder der Strecke (ETCS-Balisen) genutzt. Für das anonyme Fahren muss der gefahrene Weg des Bahnkunden erfasst werden und dafür werden hier zwei Möglichkeiten beispielhaft erläutert:
i) Relative Wegerfassung
   Jeder Zug erfasst heute schon die Fahrtkilometer. Der Lösungsansatz ist nun, dass pro Wegeinheit (z.B. pro Kilometer) ein Signal vom Fahrzeugrechner gesendet wird. Der "Kilometerstand pro Abrechnungsperiode" des Bahnkunden wird entsprechend um ein Weginkrement erhöht. Da der Kunde den anonymen Dienst nutzt, werden neben den gefahrenen Kilometer keine weiteren "Fahrdaten" erfasst.
ii) Absolute Wegerfassung
   Für die Erfassung der gefahrenen Wegstrecke werden die Telegramme der ETCS Balisen genutzt, die im Rahmen des ETCS Netz Projektes (ETCS Level 1 Limited Supervision) beispielsweise überall auf dem SBB Netz vorhanden sind bzw. sein werden. Viele Privatbahnen (z.B. RhB, SO, ZB, MO, BLS) werden im Rahmen der ZSI127 Migration ebenfalls ETCS Balisen nutzen.

Ausgenutzt wird dabei die Tatsache, dass jede ETCS Balise eine eindeutige ID hat und damit jederzeit bekannt ist, welche Balise sich wo befindet. Eine Lösung besteht nun darin, sobald der Zug derartige Balise überfährt, dass anhand der ID's von mindestens zwei aufeinanderfolgenden ETCS-Balisen die Fahrtstrecke ermittelt wird. Hierzu kann auf dem Bordrechner (OBU) eine einfache SW Applikation mit entsprechender Datenbank verwendet werden.

Damit wirklich "anonymes" Fahren sichergestellt ist, wird "nur" die ID der aktuellen Balise und die ID der letzten Balise in entsprechenden Datenbank gespeichert. In der Datenbank ist pro "ID-Paar" ein Datensatz in Meter gespeichert, welcher dem gefahrenen Weg entspricht. Diese Wegstrecke wird dann für den entsprechenden "anonymen" Bahnkunden datentechnisch erfasst, indem von seinem Transponder nur die dieser Wegstrecke entsprechende Anzahl von Wegimpulsen erfasst wird.

Folgendes Beispiel zeigt grafisch einen einfachen Fall mit drei Balisen (ID1, ID2 und ID3).

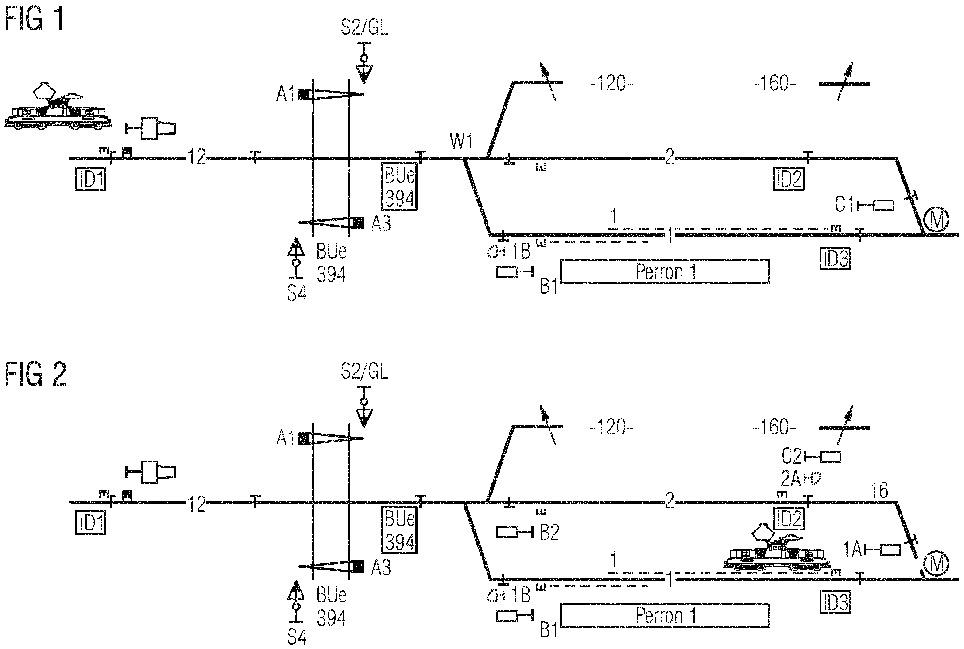

Der Zug fährt zuerst über die Balise mit ID1 und ID1 wird auf dem Zug erfasst (Figur 1). Danach fährt der Zug über die Weiche 1 bis zur Balise ID3. Sobald der Zug auf die Balise ID3 fährt (Figur 2), wird in der Datenbank der entsprechende Datensatz, in diesem Fall der Datensatz ID1_3 (z.B. Wegstrecke 3500 m) erfasst und dem entsprechenden Bahnkunden zugewiesen bzw. über die Zählimpulse an seinen Transponder übertragen.

Aus Redundanzgründen wäre es auch möglich beide Wegerfassungen parallel zu nutzen (Rückfallebene). Dies ist natürlich auch abhängig von den Kosten und der technischer Umsetzbarkeit, welchen Ansatz der Bahnbetreiber letztendlich wählen will/wird.

Für die Anmeldung/Abmeldung des Bahnkunden, dass er sich im Zug befindet, werden die "aktuellen" E-Ticketlösungen (BiBo, CICO) verwendet mit dem Unterschied, dass bei "anonymen" Bahnkunden keine Ankunfts- und Abfahrtsorte datentechnisch erfasst werden.

Für die Abrechnung besteht auch die Möglichkeit, über GooglePlay/AppStore eine Anzahl Kilometer zu kaufen, sodass dann die gefahrenen Kilometer während der Fahrt direkt von dem hier als Transponder dienenden Smart Phone mit entsprechend installierter E-Ticketing-App sofort abgebucht werden. Somit kann beispielsweise auch die E-Ticketing-Lösung der Siemens AG wie geplant eingeführt werden ohne dass nach der Einführung mit Problemen wegen Datenschutzverletzungen zu rechnen sein müsste. Neben den bestehenden Lösungen mit effektiver Erfassung von Abfahrts- und Ankunftsort ist es nur für datenschutztechnisch sensible Kunden, die zwingend anonym fahren wollen, möglich, diesen zusätzlichen Dienst auszuwählen, wo "nur" die gefahrene Distanz, aber keine Daten über den effektiven Fahrweg erfasst werden. Einzigallein in Kauf zu nehmen ist bei diesem System, dass es bei anonymen Fahrten verunmöglicht sein kann, diese Kunden z.B. von "Best Pricing"-Modellen profitieren können, wobei es über die Ausgabe der Zählimpulse sogar möglich wäre, tageszeitabhängige und/oder nutzungsabhängige Faktoren für die Zählimpulse einzupflegen.

## Patentansprüche

1. Verfahren zur Erfassung der Inanspruchnahme einer gebührenpflichtigen Leistung durch einen Teilnehmer, deren Umfang durch einen Bezug einer Dienstleistung, wie z.B. Beförderung, Zuschaustellung von Objekten, kulturelle Darbietung usw., bestimmt wird, umfassend die folgenden Verfahrensschritte:
a) Registrieren des Teilnehmers am Leistungsort anhand eines den Teilnehmers individualisierenden Transponders, wie z.B. E-Ticket-Karte, Smart Phone mit entsprechender App und dergleichen;
b) Aussenden von Zählimpulsen am Leistungsort, wobei die Zählimpulse für die in Anspruch genommene Menge der Dienstleistung repräsentativ sind;
c) Empfangen und Zählen der Zählimpulse auf dem Transponder und/oder mit dem Empfang des oder der Zählimpulse entsprechendes Inkrementieren eines mit dem Transponder assoziierbaren Speichers für die Zählimpulse; und
d1) periodisches Auslesen eines den Transponder individualisierenden Datensatzes und des mit dem Transponder assoziierbaren Speichers für die Zählimpulse; oder
d2) entsprechend der empfangenen Zählimpulse Verringern eines Prepaid-Guthabens, das mit dem Transponder assoziiert ist.

2. Verfahren nach Anspruch 1,
dadurch gekennezeichnet, dass
der Leistungsort ein Fahrzeug des öffentlichen Verkehrs und/oder eines privaten Beförderungsunternehmens, wie z.B. ein Bergbahnbetreiber, ein Privatbuslinienbetreiber, oder ein Museum, ein Theater, eine Konzerthalle, ein Freizeitpark, ein Erlebnisbad, eine Bibliothek, ein Tierpark und dergleichen ist.

3. Verfahren nach Anspruch 1 oder 2,
dadurch gekennezeichnet, dass
der Zählimpuls repräsentiv für eine Beförderungsstrecke und/oder für eine Aufenthaltsdauer ist.

4. Verfahren nach einem der vorangehenden Ansprüche,
**dadurch gekennzeichnet, dass**
der Zählimpuls anhand von mindestens einer Wegmarke von einer Onboard-Unit eines Beförderungsmittels abgeleitet wird, wobei die Wegmarke beim Passieren von dem Beförderungsmittel erfasst wird.

5. Verfahren nach einem der vorangehenden Ansprüche,
**dadurch gekennzeichnet, dass**
sich der mit dem Transponder assoziierbare Speicher für die Zählimpulse am Leistungsort, z.B. in einem Fahrzeugrechner, befindet und dort nach der Erfassung des Transponders temporär mit dem Transponder logisch verlinkt wird.

6. Verfahren nach einem der vorangehenden Ansprüche,
**dadurch gekennzeichnet, dass**
ein den ausgelesenen Zählimpulsen entsprechender Betrag an den Teilnehmer oder dessen Rechnungsempfänger verrechnet wird.
